# DEMANDE DE BREVET EUROPEEN

(11) **EP 4 001 703 A1**
(43) Date de publication de la demande: **25.05.2022**
(21) Numéro de dépôt: 21208965.0
(22) Date de dépôt: 18.11.2021
(51) Int. Cl.: F16H 57/04, F02C 7/32

(54) **PIGNON AVEC DISPOSITIF DE LUBRIFICATION**

(30) Priorité: 19.11.2020 FR 2011883
(71) Demandeur: Safran Transmission Systems, 92700 Colombes (FR)
(72) Inventeur: MORELLI, Boris, Pierre, Marcel, 77550 MOISSY-CRAMAYEL (FR); PENNACINO, Antoine, Jacques, Marie, 77550 MOISSY-CRAMAYEL (FR); RAUCOULES, Clément, 77550 MOISSY-CRAMAYEL (FR)
(74) Mandataire: Ernest Gutmann - Yves Plasseraud S.A.S.

(57) **Abrégé**

L'invention concerne un pignon (10a) s'étendant autour d'un axe d'un arbre (11), comportant des dents (13) portées par une couronne (14) reliée audit arbre par un voile conique (12) qui s'étend à partir d'une terminaison de l'arbre et s'évase vers la couronne en s'éloignant de ladite terminaison, le pignon comportant un dispositif de lubrification comprenant une arrivée de lubrifiant sur une paroi interne du voile conique et des canaux (15a), creusés dans la couronne (14) qui débouchent dans des creux (13a) entre les dents (13) du pignon. L'invention concerne en outre un dispositif d'engrènement lubrifié et une boîte d'engrenage comportant ledit pignon.

## Description

### Domaine technique

Le domaine technique de l'invention est celui de la lubrification des engrènements de pignons, notamment des pignons de turbomachines d'aéronef et plus particulièrement ceux utilisés pour les systèmes d'entrainement d'accessoires ou « accessory gearbox » (ADT) et les boites de transfert ou « transfert gearbox » (TGB).

### Technique antérieure

Dans les turbomachines, une partie de la puissance générée par la turbine est utilisée pour entraîner différents accessoires nécessaires au fonctionnement de la turbomachine ou d'un aéronef qui en est équipé, tels que générateur électrique, pompe de lubrification ou encore pompe à carburant.

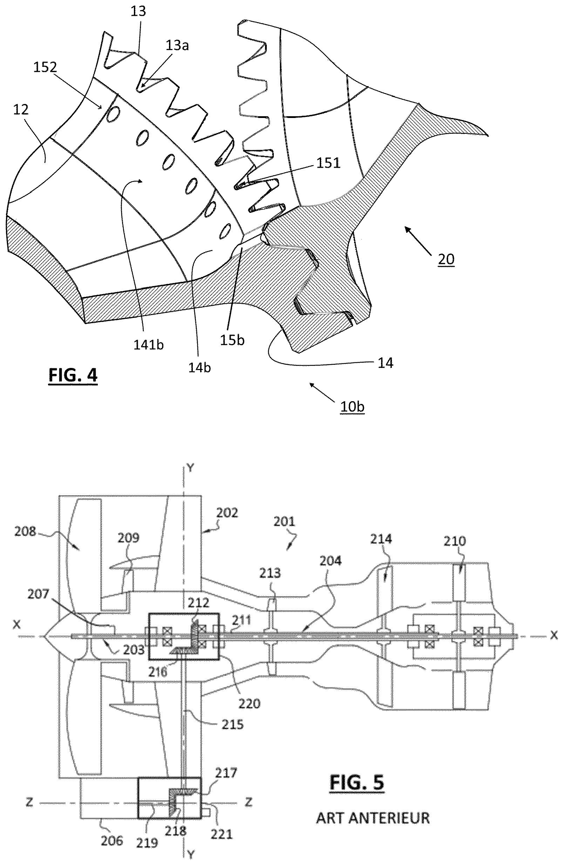

A cet effet, une turbomachine 201 traditionnelle telle que représentée en figure 5 comporte généralement un boitier d'engrenage d'entrée 220 (IGB : Inlet Gear Box), un arbre d'entraînement radial 215 (RDS : Radial Drive Shaft), un boîtier d'engrenage de transfert 221 (TGB : Transfer Gear Box) et un boitier d'engrenage d'accessoires 206 (AGB : Accessory Gear Box) supportant les différents accessoires.

Lorsque l'arbre moteur 211 de la turbomachine est entraîné en rotation, il entraine mécaniquement les différents accessoires par l'intermédiaire de l'IGB 220, du RDS 215, du TGB 221 puis de l'AGB 206. L'IGB et le TGB assurent un renvoi d'angle qui permet de passer d'un système de rotation longitudinal à un système de rotation transversal sur une même turbomachine par des mécanismes d'engrenages.

L'AGB transmet le mouvement de rotation des différents accessoires par une combinaison d'engrenages appelée train d'engrenages. L'ensemble formé par l'AGB et les accessoires peut être positionné dans le carter de la turbomachine, à proximité de la soufflante dans une zone appelée « zone fan » ou encore dans une zone « core » c'est-à-dire dans une zone centrale de la turbomachine, autour du compresseur haute pression.

Dans les boites TGB, il est nécessaire pour des raisons de fonctionnement (grippage, échauffement...) de lubrifier l'engrènement. La vitesse de rotation des pignons est un facteur de mauvaise lubrification car elle empêche le jet du lubrifiant, envoyée par un gicleur, d'atteindre le point d'engrènement. Le jet du lubrifiant étant « coupé » par les dents avant d'arriver sur les flancs de dents.

Aujourd'hui pour lubrifier un engrènement de pignons on utilise dans certains cas le jet d'un gicleur qui vise l'engrènement par l'extérieur, le gicleur pouvant être intégré à un dispositif déflecteur. Dans ce cas, il est nécessaire de réduire la longueur du jet car si celui-ci est trop éloigné des dents, il va être dévié ou « cassé » par le vent dû à la rotation des pignons. C'est pourquoi, pour garantir une lubrification suffisante il est alors nécessaire d'utiliser une quantité importante de lubrifiant. Dans le cas où le pignon s'étend autour d'un axe et comprend un arbre et des dents portées par un voile qui s'étend autour de l'arbre, il est aussi possible d'utiliser un dispositif de lubrification comprenant des gicleurs situé côté intérieur du pignon et comprenant des trous de sortie qui débouchent entre les dents du pignon. Une telle disposition est toutefois plus compliquée et oblige à réaliser une pièce mécanique supplémentaire qui alourdit le dispositif.

En outre, dans le cadre des études d'hybridation, les accessoires ADT sont amenés à avoir des vitesses de rotations supérieures par rapport aux accessoires des turbomachines traditionnelles ce qui accroît le phénomène de déviation ou de cassure du jet et rend plus difficile la lubrification par jet.

### Exposé de l'invention

L'invention offre une solution aux problèmes évoqués précédemment, en permettant d'améliorer l'apport du lubrifiant sur l'engrènement tout en limitant la quantité de lubrifiant nécessaire au moyen d'un pignon pourvu de moyens de lubrification des dents.

Plus précisément, l'invention prévoit un pignon s'étendant autour d'un axe d'un arbre, comportant des dents portées par une couronne reliée audit arbre par un voile conique, qui s'étend à partir d'une terminaison de l'arbre et s'évase vers la couronne en s'éloignant de ladite terminaison, le pignon comportant un dispositif de lubrification comprenant une arrivée de lubrifiant sur une paroi interne du voile conique et des canaux, creusés dans la couronne qui débouchent dans des creux entre les dents du pignon.

Cette configuration pour laquelle la lubrification se fait par l'intérieur du pignon minimise les pièces nécessaires pour la lubrification et en réduit le poids. Elle apporte le lubrifiant qui est en général de l'huile au plus près des creux des dents sans pour cela que le gicleur soit trop proche de ces dernières et soit perturbé par le vent que crée leur rotation.

Les caractéristiques exposées dans les paragraphes suivants correspondent à des modes de réalisation pouvant être mises en œuvre indépendamment les uns des autres ou en combinaison les uns avec les autres.

Les canaux peuvent déboucher au niveau des creux entre les dents du côté de l'axe de rotation du pignon ce qui amène directement le lubrifiant dans ces creux pour y former un film.

Le lubrifiant est ainsi injecté directement au pied des dents et, avec la force centrifuge, le lubrifiant va migrer vers le haut de la dent et vers l'extérieur.

Selon un premier mode de réalisation, les canaux sont des rainures creusées dans une paroi interne latérale de la couronne côté axe de rotation et débouchant dans les creux des dents au niveau de l'extrémité des dents côté axe de rotation. Dans ce cas le lubrifiant se déverse dans les creux depuis la face intérieure de la couronne portant les dents.

Selon un second mode de réalisation, les canaux sont des canaux tubulaires débouchant d'un premier côté par des trous d'entrée de lubrifiant dans le voile ou dans une paroi interne de la couronne prolongeant le voile et d'un second côté par des trous de sortie de lubrifiant au fond des creux entre les dents pour amener le lubrifiant dans ces creux. Cette configuration permet d'apporter le lubrifiant sous les dents du pignon complémentaire.

La paroi interne de la couronne peut comporter un rebord interne incurvé au niveau d'une jonction entre la paroi interne du voile conique et de la couronne de sorte à réaliser un creux annulaire formant une réserve pour le lubrifiant plaqué sur ladite paroi interne par la force centrifuge causée par la rotation du pignon. Cette réserve peut notamment servir à démarrer la lubrification à faible vitesse de rotation du pignon.

Le nombre de canaux, canaux tubulaires ou rainures, est avantageusement égal au nombre de creux entre les dents.

Le pignon peut être un pignon conique ou droit et comporter une denture hélicoïdale ou droite, le lubrifiant se répartissant dans les creux entre les dents sous l'action de la force centrifuge due à la rotation du pignon.

Le dispositif peut comporter au moins un gicleur dont la sortie est dirigée vers le voile du pignon. Le gicleur arrosant alors le voile ce qui répartit le lubrifiant à la surface du voile.

Avantageusement, le gicleur dépose le lubrifiant au pied du voile côté arbre, ce qui étale le lubrifiant sur le voile en direction des canaux tandis que la rotation du pignon va entrainer le lubrifiant vers la partie périphérique du voile et les canaux grâce à la force centrifuge et le propulser entre les dents. Ceci permet d'apporter du lubrifiant directement dans l'engrènement sans pièce mécanique supplémentaire.

Selon un mode de réalisation, le pignon est un pignon à denture hélicoïdale. Le pignon pourrait également être un pignon à denture droite.

Le pignon peut être un pignon droit ou conique ce dernier type de pignon étant en particulier utilisé pour les renvois d'angle des boites de transfert.

L'invention concerne également un dispositif d'engrènement de deux pignons comprenant au moins un pignon avec au moins une des caractéristiques précédentes.

Le dispositif d'engrènement comporte avantageusement un premier pignon selon l'invention, au moins un gicleur dont la sortie est dirigée vers le voile dudit premier pignon et un second pignon pourvu ou non du dispositif de lubrification de l'invention, le premier pignon étant engrené avec le second pignon.

Le gicleur dépose avantageusement le lubrifiant sur le voile côté arbre, de sorte que la force centrifuge causée par la rotation du pignon étale le lubrifiant sur le voile en direction des canaux. Le gicleur peut notamment déposer le lubrifiant au pied du voile.

L'invention s'applique à une boîte d'engrenage d'une turbomachine comprenant un au moins un dispositif d'engrènement selon l'invention.

### Brève description des dessins

D'autres caractéristiques, détails et avantages de l'invention apparaîtront à la lecture de la description détaillée ci-après d'exemples de réalisation non limitatifs, et à l'analyse des dessins annexés, sur lesquels :
[Fig. 1] montre une vue en perspective d'un engrenage pourvu d'un dispositif de lubrification selon un premier mode de réalisation ;
[Fig. 2] montre un détail en perspective coupe du dispositif d'engrenage de la figure 1 ;
[Fig. 3] montre une vue en perspective d'un engrenage pourvu d'un dispositif de lubrification selon un second mode de réalisation ;
[Fig. 4] montre un détail en perspective coupe du dispositif d'engrenage de la figure 3 ;
[Fig. 5] montre une représentation schématique en coupe longitudinale d'un exemple de turbomachine de l'art antérieur ;
[Fig. 6] montre une représentation schématique en coupe transversale d'un dispositif d'engrènement selon un mode de réalisation de l'invention.

### Description des modes de réalisation

Les dessins et la description ci-après contiennent des éléments pouvant non seulement servir à mieux faire comprendre la présente invention, mais aussi contribuer à sa définition, le cas échéant.

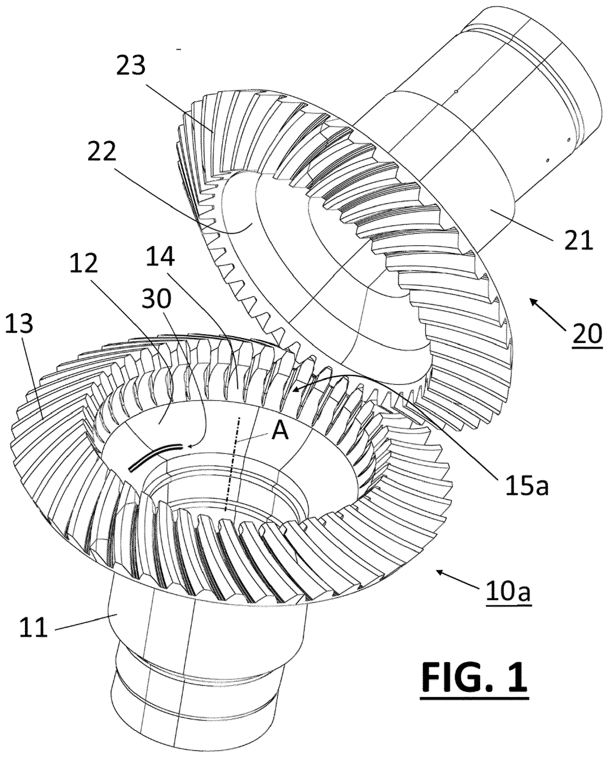

La figure 1 représente un engrenage pourvu d'un premier pignon 10a et d'un second pignon 20. Les pignons représentés sont des pignons à denture conique et dents hélicoïdales mais l'invention peut s'adresser à tout type de pignon. Le pignon 10a comporte une denture 13 portée par une couronne annulaire 14 ou une jante qui est reliée à un arbre 11 au moyen d'un voile conique 12.

Le voile conique qui peut aussi être un voile droit s'étend à partir d'une terminaison de l'arbre 11 et s'évase vers la couronne en s'éloignant de ladite terminaison.

Selon l'invention le pignon comporte un dispositif de lubrification des dents du pignon comprenant une arrivée de lubrifiant sur une paroi interne du voile conique et des canaux, ici sous forme de rainures 15a creusées dans une paroi 141a côté intérieur de la couronne 14. La paroi 141a est circulaire côté intérieur de la couronne autour de l'axe A de rotation du pignon.

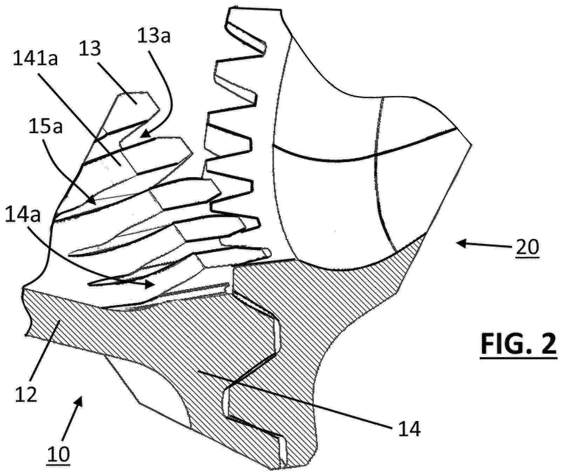

Les rainures 15a plus précisément représentées en figure 2 débouchent dans des creux 13a entre les dents 13 du pignon, à l'extrémité de ces creux côté intérieur du pignon. Le lubrifiant, qui est par exemple de l'huile, s'écoule sur la paroi du voile sous l'action de la force centrifuge créée par la rotation du pignon et est guidé dans les rainures entre les dents.

Les rainures qui débouchent entre les dents sont des rainures radiales ou principalement radiales.

La paroi interne 141a de la couronne peut en outre comporter un rebord 14a incurvé tourné vers l'intérieur du pignon au niveau d'une jonction entre la paroi interne du voile conique et de la couronne en sorte de réaliser un creux annulaire qui forme une réserve pour le lubrifiant plaqué sur ladite paroi interne par la force centrifuge causée par la rotation du pignon et qui retient au moins temporairement une partie du lubrifiant pour le guider vers les rainures entre les creux des dents.

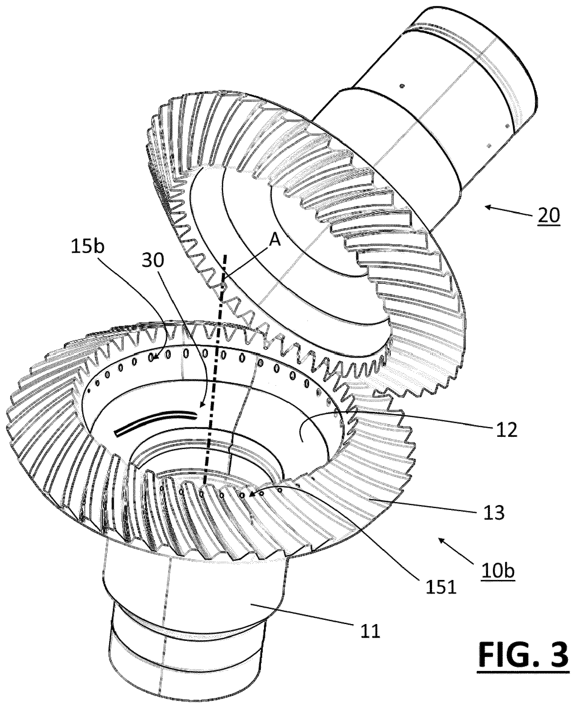

Dans l'exemple des figures 3 et 4, représentant un pignon 10b d'un mode de réalisation alternatif, les canaux sont des canaux tubulaires 15b réalisés dans la couronne 14. Ces canaux tubulaires 15b débouchent d'un premier côté dans le voile ou la paroi interne 141b de la couronne par des trous 152 d'entrée de lubrifiant. Ces trous sont ici réalisés à proximité de l'extrémité évasée du voile au niveau de la jonction entre le voile et la couronne portant les dents. Les canaux tubulaires sont pourvus d'un second côté de trous de sortie 151 de lubrifiant qui débouchent au fond des creux 13a entre les dents 13 dans la partie intérieure des dents pour amener le lubrifiant dans ces creux.

On entend par partie intérieure des dents, la partie des dents la plus proche de l'axe de rotation du pignon.

Les canaux tubulaires sont orientés radialement ou principalement radialement par rapport à l'axe du pignon.

Le nombre de trous de sortie 151 est ici égal au nombre de creux entre les dents pour homogénéiser la distribution du lubrifiant au niveau de chaque creux. Il en est de même dans l'exemple des figures 1 et 2 pour les rainures 15a. Il est à noter que le nombre de perçages n'est pas nécessairement égal au nombre de creux, les perçages pouvant être répartis différemment mais de préférence équirépartis pour limiter le balourd du pignon.

Dans ce mode de réalisation, la paroi interne 141b de la couronne comporte aussi un rebord incurvé 14b pour former une zone réservoir pour le lubrifiant.

Selon les exemples représentés, le pignon est un pignon conique particulièrement adapté à réaliser un renvoi d'angle avec le pignon 20 mais l'invention peut aussi s'appliquer à un pignon droit dont les dents sont parallèles ou perpendiculaires à l'axe de rotation du pignon.

Par ailleurs, le pignon représenté est un pignon à denture hélicoïdale mais l'invention peut aussi s'appliquer à des pignons à denture droite.

Pour amener le lubrifiant, un gicleur 30 est disposé dans le pignon, sa sortie projetant un jet de lubrifiant étant dirigée vers le voile du pignon. Le gicleur est préférablement disposé à une distance suffisante des dents pour que le jet ne soit pas cassé par les bords des dents ou par le vent causé par la rotation des dents. Le gicleur peut notamment être disposé au pied du voile à proximité de la jonction entre le voile et l'arbre. Ainsi, le gicleur 30 dépose ou projette le lubrifiant du côté du pied du voile 12, de sorte que la force centrifuge causée par la rotation du pignon étale le lubrifiant sur le voile en direction des canaux 15a, 15b de manière homogène.

Le second pignon 20 de l'engrènement peut être pourvu ou non d'un dispositif de lubrification.

La puissance du jet et son débit vont être adaptés en fonction de la largeur des rainures ou du diamètre des canaux tubulaires et de la vitesse de rotation des pignons pour fournir une lubrification correcte à haute vitesse de rotation des pignons.

L'invention permet ainsi de réaliser, sans pièces complexes additionnelles et sans masse supplémentaire, un dispositif d'engrènement lubrifié par l'intérieur. Ce dispositif ne gêne pas pour le positionnement d'un carter ou d'un cache de protection autour de la couronne et des dents pour éviter une projection d'huile trop importante sous l'effet de la force centrifuge due à la rotation des pignons.

La figure 5 représente de façon schématique une coupe longitudinale d'une turbomachine aéronautique à double flux 201 de l'art antérieur dans laquelle au moins un dispositif d'engrènement pourvu d'au moins un pignon 10a, 10b selon l'invention peut être mis en œuvre.

La turbomachine 201 d'axe longitudinal X-X comporte un carter de soufflante 202, un corps basse-pression 203, un corps haute-pression 204, une chambre de combustion et un boîtier d'entraînement d'accessoires 206.

Le corps basse-pression 203 comporte un arbre basse-pression 207 centré sur l'axe longitudinal X-X, une soufflante 208 montée sur l'extrémité avant de l'arbre basse-pression 207, un compresseur basse-pression 209 fixé sur la soufflante 208 en aval de celle-ci, et une turbine basse-pression 210 montée sur l'extrémité arrière de l'arbre basse- pression 207.

Le corps haute-pression 204 comporte un arbre haute-pression 211 disposé concentriquement autour de l'arbre basse-pression 207, un premier pignon d'entrée 212 monté à l'extrémité avant de l'arbre haute-pression 211, un compresseur haute-pression 213 monté sur l'arbre haute-pression 211 en aval du premier pignon d'entrée 212 et une turbine haute-pression 214 montée sur l'extrémité arrière de l'arbre haute-pression 211.

On note que les différents compresseurs 209, 213 et turbines 210, 214 des corps basse pression 203 et haute pression 204 de la turbomachine 201 représentés sur la figure 5 ont été représentés avec un unique étage d'aubes afin de faciliter leur compréhension.

Le boîtier d'entraînement d'accessoires AGB 206, fixé sous le carter de soufflante 202 est entraîné en rotation par l'arbre haute- pression 211 via un arbre d'entrainement radial 215 portant un premier pignon de sortie 216 à son extrémité supérieure et un deuxième pignon d'entrée 217 à son extrémité inférieure puis via un arbre d'entrée 219 relié au train d'engrenage de l'AGB 206 et portant un deuxième pignon de sortie 218. On note que dans d'autres modes de réalisation non représentés, l'AGB est positionné dans la nacelle ou encore dans la zone dite « core ou coeur » de la turbomachine.

On entend par « pignons », tous types de pièces mécaniques dentées et destinées à coopérer avec une ou plusieurs pièces dentées afin de transmettre un mouvement de rotation et dans le cadre de la présente invention, au moins certains desdits pignons peuvent être réalisés selon les modes de réalisation des figures 1 ou 3.

Le premier pignon d'entrée 212 est engrené avec le premier pignon de sortie 216 en formant un renvoi d'angle, le premier pignon d'entrée 212 et le premier pignon de sortie 216 étant logés dans un boitier d'engrenage d'entrée IGB 220. Grâce à la coopération du premier pignon d'entrée 212 avec le premier pignon de sortie 216, une rotation de l'arbre haute-pression 211 autour de l'axe X-X provoque une rotation de l'arbre d'entrainement radial 215 autour de son axe de rotation Y-Y.

Par ailleurs, le deuxième pignon d'entrée 217 est engrené avec un deuxième pignon de sortie 218 du boitier d'entrainement d'accessoires 206 en formant un renvoi d'angle, le deuxième pignon d'entrée 217 et le deuxième pignon de sortie 18 étant logés dans un boitier d'engrenage de transfert TGB 221. Grâce à la coopération du deuxième pignon d'entrée 217 avec le deuxième pignon de sortie 218, une rotation de l'arbre d'entrainement radial 15 autour de l'axe Y-Y provoque une rotation de l'arbre d'entrée 219 autour de son axe de rotation Z-Z. L'arbre d'entrée 219 transmet ainsi sa puissance à un train d'engrenages (non représenté) du boitier d'entrainement d'accessoires 206 qui entraine en rotation les différents accessoires supportés par ledit boîtier d'entraînement d'accessoires 206. Les accessoires sont par exemple une pompe à carburant, un générateur électrique, une pompe de lubrification, une pompe hydraulique, un démarreur, une transmission à vitesse constante (CSD) ou encore un compte-tours.

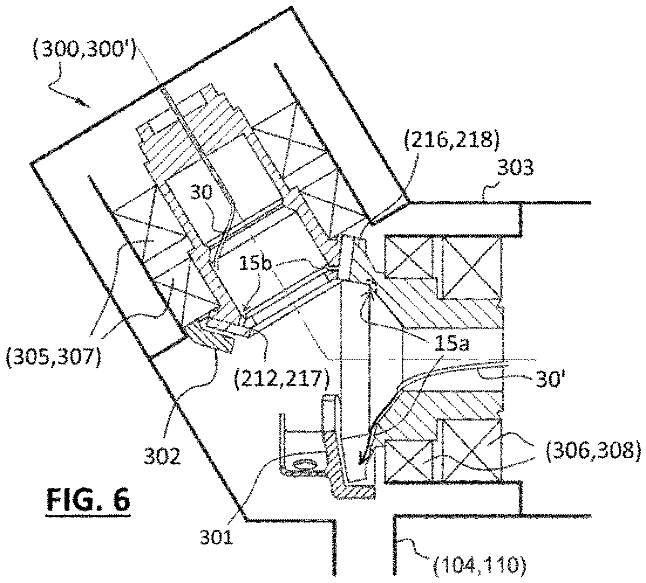

Afin de limiter les échauffements d'huile au niveau des engrenages, un dispositif d'engrènement pourvu d'un ou deux pignons lubrifiés selon l'invention est par exemple positionné au niveau de l'IGB et/ou du TGB qui seront décrits en référence à la figure 6. On note que le dispositif d'engrènement selon l'invention peut être utilisé pour tous types d'engrenages de la turbomachine autres que ceux décrits soit des engrenages à deux pignons (coniques ou droits/cylindriques) ou encore des engrenages à plusieurs pignons (exemple : trio-conique).

Comme représenté en figure 6, les engrenages de l'IGB 220 et de la TGB 221 sont généralement carénés par un déflecteur qui permet d'orienter le flux d'air généré par la ventilation de l'engrènement afin, d'une part, de protéger les écoulements d'huile gravitaires environnants, et d'autre part, d'éliminer l'huile de lubrification des engrènements de flux d'air.

Le dispositif d'engrènement 300, 300' selon la figure 6 comporte au moins :
- un pignon d'entrée adapté pour coopérer avec un arbre de transmission,
- un pignon de sortie formant un engrenage avec le pignon d'entrée et éventuellement un premier déflecteur carénant au moins une partie du pignon d'entrée.

En référence à la figure 6, lorsque le dispositif d'engrènement 300 est positionné au niveau de la boite d'engrenage d'entrée (IGB) 220, ledit dispositif 300 comporte :
- un pignon d'entrée 212 à voile droit relié à l'arbre de transmission 211 de la figure 5,
- un pignon de sortie 216 à voile conique, relié à l'arbre de transmission 215 de la figure 1,
- un premier déflecteur 301,
- un deuxième déflecteur 302,
- un carter 303,
- des roulements ou paliers 305, 306 de maintien des pignons dans le carter et des gicleurs 30, 30' amenant le lubrifiant sur les parois internes des pignons.

Par ailleurs, dans un second mode de réalisation représenté aussi sur la figure 6, le dispositif d'engrènement 300' est positionné au niveau de la boite d'engrenage de transfert TGB 221. Dans ce second mode de réalisation, le dispositif d'engrènement comporte :
- un pignon d'entrée 217 à voile droit relié à l'arbre de transmission 215 de la figure 1,
- un pignon de sortie 218 à voile conique relié à l'arbre de sortie 219 de la figure 1,
- le premier déflecteur 301,
- le deuxième déflecteur 302,
- le carter 303,
- des roulements ou paliers 307, 308 de maintien des pignons dans le carter et les gicleurs 30, 30' amenant le lubrifiant sur les parois internes des pignons.

On note selon l'exemple représenté que les pignons 216, 218 sont pourvues des rainures 15a du premier mode de réalisation du dispositif de lubrification de l'invention alors que les pignons 212, 217 sont pourvus des canaux tubulaires 15b du second mode de réalisation du dispositif de lubrification de l'invention. On peut toutefois n'équiper qu'un seul des deux pignons avec un dispositif de lubrification de l'invention si les besoins en lubrification ne nécessitent pas un apport de lubrifiant très levé.

Les pignons d'entrée et de sortie forment ici des renvois d'angle.

L'invention qui s'applique à tout type d'engrènements à pignon notamment les engrènements haute vitesse de turbomachines telles que les turbomachines aéronautiques ne se limite pas aux exemples décrits ci-avant, seulement à titre d'exemple et, comme vu précédemment, les pignons à voile conique ou droit peuvent être des pignons droits ou pourvus d'une denture droite.

## Revendications

1. Pignon (10a, 10b) s'étendant autour d'un axe d'un arbre (11), comportant des dents (13) portées par une couronne (14) reliée audit arbre par un voile conique (12) qui s'étend à partir d'une terminaison de l'arbre et s'évase vers la couronne (14) en s'éloignant de ladite terminaison, **caractérisé en ce qu'**il comporte un dispositif de lubrification comprenant une arrivée de lubrifiant sur une paroi interne du voile conique (12) et des canaux (15a, 15b), creusés dans la couronne (14) qui débouchent dans des creux (13a) entre les dents (13) du pignon.

2. Pignon (10a, 10b) selon la revendication 1, pour lequel lesdits canaux (15a, 15b) débouchent au niveau des creux entre les dents du côté de l'axe (A) de rotation du pignon.

3. Pignon selon la revendication 1 ou 2, pour lequel les canaux sont des rainures (15a) creusées dans une paroi interne (141) de la couronne côté axe de rotation, lesdites rainures débouchant dans les creux des dents au niveau de l'extrémité des dents côté axe (A) de rotation.

4. Pignon selon la revendication 1 ou 2, pour lequel les canaux sont des canaux tubulaires (15b) débouchant d'un premier côté par des trous (152) d'entrée de lubrifiant dans le voile ou dans une paroi interne (141b) de la couronne prolongeant le voile et d'un second côté par des trous de sortie (151) de lubrifiant au fond des creux (13a) entre les dents (13) pour amener le lubrifiant dans ces creux.

5. Pignon (10a, 10b) selon l'une quelconque des revendications précédentes, pour lequel la paroi interne (141a, 141b) de la couronne (14) comporte un rebord interne (14a, 14b) incurvé au niveau d'une jonction entre la paroi interne du voile conique et de la couronne en sorte de réaliser un creux annulaire formant une réserve pour le lubrifiant plaqué sur ladite paroi interne (141a, 141b) par la force centrifuge causée par la rotation du pignon.

6. Pignon selon l'une quelconque des revendications précédentes, pour lequel, le nombre de canaux est égal au nombre de creux entre les dents.

7. Pignon selon l'une quelconque des revendications précédentes, pour lequel le pignon est un pignon droit ou conique.

8. Pignon selon l'une quelconque des revendications précédentes, pour lequel le pignon est un pignon à denture hélicoïdale ou à denture droite.

9. Dispositif d'engrènement lubrifié comprenant au moins un premier pignon (10a, 10b) selon l'une quelconque des revendications précédentes, au moins un gicleur (30) dont la sortie est dirigée vers le voile dudit premier pignon et un second pignon (20) pourvu ou non de dispositif de lubrification, le premier pignon étant engrené avec le second pignon.

10. Dispositif d'engrènement lubrifié selon la revendication 9 pour lequel le gicleur (30) dépose le lubrifiant sur le voile (12) côté arbre, de sorte que la force centrifuge causée par la rotation du pignon étale le lubrifiant sur le voile en direction des canaux (15a, 15b).

11. Boîte d'engrenage (220, 221) de turbomachine comprenant un dispositif d'engrènement selon la revendication 9 ou 10.
